# EUROPEAN PATENT SPECIFICATION

(11) **EP 2 708 428 B1**
(45) Date of publication and mention of the grant of the patent: **07.11.2018**
(21) Application number: 12184215.7
(22) Date of filing: 13.09.2012
(51) Int. Cl.: B60T 13/26, B60T 15/04

(54) **System for controlling vehicular brakes, in particular of commercial or industrial vehicles**
System zur Steuerung von Fahrzeugbremsen, insbesondere von Nutz- und Industriefahrzeugen
Système de commande de freins de véhicules, notamment de véhicules commerciaux ou industriels

(43) Date of publication of application: 19.03.2014
(73) Proprietor: IVECO MAGIRUS AG, 89079 Ulm (DE)
(72) Inventor: Leoka, Georg, 89075 ULM (DE); Baur, Franz, 88480 ACHSTETTEN (DE)
(74) Representative: Franzolin, Luigi

(56) References cited:
- EP-A1- 1 529 705
- JP-A- 58 105 866
- US-A- 4 428 621

## Description

### Field of the invention

The present invention relates to a system for controlling vehicular brakes, in particular of commercial or industrial vehicles during parking conditions. An example of prior art solution is given in US4428621.

### Description of the prior art

Industrial vehicles are usually provided with pneumatic brakes. The brake system comprises a first circuit commanding the rear brakes and a second circuit C2 commanding the front brakes. In particular, the braking force is proportional with the air pressure into the circuits acting on the pneumatic brake actuators.

The brake systems also comprises a third circuit C3, usually acting on the rear brakes, that is pressurized in order to retract emergency springs, for avoiding braking of the rear brakes during normal conditions.

When the air is discharged the emergency springs elongate and push the pads against the disks/drums. Therefore C3 works in the opposite way with respect to the C2 circuit. This third circuit C3 is operated through the manual lever either as emergency brake or as parking brake.

The parking brakes usually involve the rear axles of the vehicles or in rare cases the front and the rear axle. In some situations it involves high stress in the rear disks/drums: for example, when the vehicle is transported within a ferryboat, or when the vehicle comprises a crane, etc.., the roll stress acting on the vehicle is discharged only on the rear brakes.

Therefore, in order to assure a safe stability of the vehicle, the parking brake is usually energetically engaged for a long period.

As a consequence of the vibrations and of the movements induced on the vehicle, the rear disc or drum brakes can be subjected to wear and abrasions.

### Summary of the invention

Therefore, the main object of the present invention is to provide a system for controlling vehicular brakes, in particular of commercial or industrial vehicles, which overcomes the above problems/drawbacks.

The main principle of the invention is to provide a manually switchable command able to supply the automatic braking of the front brakes, when the parking/emergency brake is engaged.

These and further objects are achieved by means of an apparatus and method as described in the attached claims, which form an integral part of the present description.

### Brief description of the drawings

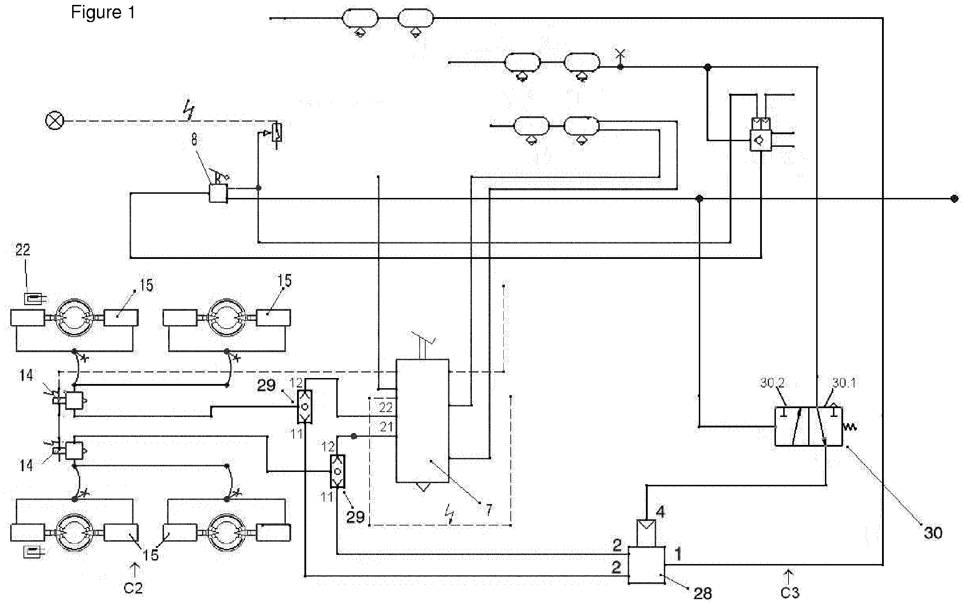

The invention will become fully clear from the following detailed description, given by way of a mere exemplifying and non limiting example, to be read with reference to the attached figures, wherein figure 1 shows a pneumatic scheme implemented according to the present invention.

The same reference numerals and letters in the figures designate the same or functionally equivalent parts.

### Detailed description of the preferred embodiments

The basic idea of the present invention aims to "interconnect" the emergency/parking circuit C3 with front circuit C2 in some predefined and controllable circumstances.

It should be clear that such circuits work in an opposite way:
- front braking is directly proportional to the pressure into the circuit C2,
- rear emergency/parking braking is proportional to the venting of the circuit C3.

According to the present invention, a hand brake valve 8, is able to control parking braking through a supplementary pneumatic valve 30, a 3/2-way valve, that is configured in order to control such reversible connection between the C2/C3 circuits. In particular, when the parking brake is engaged and the switchable valve 30 is switched in ON position, see the 30.1 configuration, through the respective hand brake valve 8 , the air pressure in the front circuit C2 is forced to increase proportionally with the decreasing on the parking/emergency circuit C3 venting. This leads to the engagement of the front brakes when the rear brakes are engaged.

Therefore, the emergency/parking brake engagement condition is in logic AND with the logic condition of the pneumatic valve 30: when both are ON the front brakes engagement is caused.

In particular, when the valve 30 is moved in ON position, the air pressure is delivered to the control port 4 of the relay valve 28 that allows the supply of air pressure of the air source to the circuit C2 through the 2-way valve 29. The relay valve 28 comprises at least one input port 1, a control port 4 and two outputs ports 2. The input is connected with the vehicular pressurized air source, and the outputs are connected with the front circuit C2.

The supply of air pressure on the control port 4 of the relay valve 28 due to the venting of the rear circuit C3 causes the connection of the input 28.1 with the output 28.2, namely the connection of the circuit C2 with the pressurized air source.

Therefore, the front brakes are pressurized and induced to brake the front disks/drums when the rear parking/emergency circuit C3 is vented, namely activated.

On each of the right and left portions of the front circuit C2 is added a two way valve 29 having
- a first inlet door 29.12 connected with an output 21 or 22 of the monolithic valve 7 of the service brake / pedal and
- a second inlet door 29.11 connected with one of the outputs 28.2 of the relay valve 28 and
- an outlet door 29.12 connected with the front pneumatic brake actuator 15.
Also the monolithic valve 7 of the service brake pedal has an input connected with the vehicular pressurized air source. According to a preferred embodiment of the invention, the outlet 29.12 is connected with the pneumatic brake actuator 15 through the venting valves 14 controlled by the ABS system.

According to present invention, the label "output/outlet" or "input/inlet" is given according to the circulation direction of the pressurized air.

Thanks to this solution, both the right and left portions of the front circuit C2 are pressurized when the brake pedal is pressed and also when the relay valve 28 connects its output doors 28.2 with the pressurized air source connected with its input port 28.1.
As long as the hand brake valve causes the 3/2-way valve 30 to connect emergency/parking circuit C3 with the front circuit C2, all the wheels are braked when the parking/emergency brake is engaged.
When the mission ends, the origin separation among the front C2 and rear circuit C3 is re-established by switching the valve 30 OFF, namely by causing the activation of the 30.2 portion of the switchable 3/2 way valve 30, caused by the OFF switching of the hand brake valve 8.

In the later situation, the control port 4 is vented and the C3 circuit is separate by the front circuit C2.

Thanks to the present invention, the braking force is equally distributed among all the vehicle wheels. This implies a better vehicle stability and a strong reduction of the rear brake wear.

## Claims

1. System for controlling brakes of commercial or industrial vehicles having a pneumatic brake implant comprising at least
- a front circuit (C2) provided with pneumatic actuators (15) configured to perform service braking proportional with the pressurization thereof and
- a rear emergency/parking circuit (C3) configured to perform emergency/parking braking proportional with the venting thereof,
the system comprising interconnecting means (28, 29, 30) for causing the pressurization of the front circuit (C2) proportional with the venting of the emergency/parking brake circuit (C3).

2. System according to claim 1, wherein said interconnecting means comprise
- a first valve assembly (28) having a control port (4) and being able to connect the front pneumatic actuators (15) with a vehicular pressurized air source, when said control (4) is released,
- a second valve assembly (30) comprising a selectable configuration (30.1) capable of connecting the rear circuit (C3) with said control port (4) of the first valve assembly (28) in order to cause its release.

3. System according to claim 2, wherein said second valve assembly (30) comprises a further selectable configuration (30.1) capable of disconnect the interconnection among the front (C2) and rear (C3) circuits.

4. Method for controlling vehicular brakes of commercial or industrial vehicles having a pneumatic brake implant comprising at least
- a front circuit (C2) provided with pneumatic actuators (15) configured to perform service braking proportional with the pressurization thereof and
- a rear emergency/parking circuit (C3) configured to perform emergency/parking braking proportional with the venting thereof,
the method comprising the step of interconnecting said circuits so that a venting of the rear circuit (C3) causes a corresponding pressurization of the front circuit (C2).

## Patentansprüche

1. System zur Steuerung von Fahrzeugbremsen von Nutz- oder Industriefahrzeugen, mit einem pneumatischen Bremsimplantat, umfassend wenigstens
• einen vorderen Kreislauf (C2) ausgestattet mit pneumatischen Aktoren (15) ausgestaltet zur Durchführung von Betriebsbremsungen proportional zur Druckbeaufschlagung derselben und
• einen hinteren Notfall-/Parkkreislauf (C3) ausgestaltet zur Durchführung von Notfall-/Parkbremsungen proportional zur Druckentlastung derselben,
wobei das System Verbindungsmittel (28, 29, 30) umfasst, die bewirken, dass die Druckbeaufschlagung des vorderen Kreislaufs (C2) proportional zu der Druckentlastung des Notfall-/Parkbremskreislaufs (C3) ist.

2. System gemäß Anspruch 1, **dadurch gekennzeichnet, dass** die Verbindungsmittel folgendes umfassen:
• eine erste Ventilanordnung (28) mit einer Steuerventilöffnung (4) und geeignet, die vorderen pneumatischen Aktoren (15) mit einer Fahrzeugdruckluftquelle zu verbinden, wenn die Steuerventilöffnung (4) geöffnet ist,
• eine zweite Ventilanordnung (30) umfassend eine auswählbare Konfiguration (30.1), die geeignet ist, den hinteren Kreislauf (C3) mit der Steuerventilöffnung (4) der ersten Ventilanordnung (28) zu verbinden, um deren Öffnung zu bewirken.

3. System gemäß Anspruch 2, bei welchem die zweite Ventilanordnung (30) eine weitere auswählbare Konfiguration (30.1) umfasst, die geeignet ist, die Verbindung zwischen den vorderen (C2) und den hinteren (C3) Kreisläufen zu unterbrechen.

4. Verfahren zur Steuerung von Fahrzeugbremsen von Nutz- oder Industriefahrzeugen, mit einem pneumatischen Bremsimplantat, umfassend wenigstens
• einen vorderen Kreislauf (C2) ausgestattet mit pneumatischen Aktoren (15) ausgestaltet zur Durchführung von Betriebsbremsungen proportional zur Druckbeaufschlagung derselben und
• einen hinteren Notfall-/Parkkreislauf (C3) ausgestaltet zur Durchführung von Notfall-/Parkbremsungen proportional zur Druckentlastung derselben,
wobei das Verfahren einen Schritt der Verbindung der Kreisläufe umfasst, so dass eine Druckentlastung des hinteren Kreislaufs (C3) eine korrespondierende Druckbeaufschlagung des vorderen Kreislaufs (C2) verursacht.

## Revendications

1. Système pour commander les freins de véhicules commerciaux ou industriels comportant un implant de frein pneumatique comprenant au moins
- un circuit avant (C2), pourvu d'actionneurs pneumatiques (15,) configuré pour effectuer un freinage de service proportionnel à la mise sous pression de celui-ci ; et
- un circuit arrière d'urgence/de stationnement (C3), configuré pour effectuer un freinage d'urgence/de stationnement proportionnel à la ventilation de celui-ci,
le système comprenant des moyens d'interconnexion (28, 29, 30) pour provoquer la mise sous pression du circuit avant (C2) proportionnelle à la ventilation du circuit de freinage d'urgence/de stationnement (C3).

2. Système selon la revendication 1, dans lequel lesdits moyens d'interconnexion comprennent
- un premier ensemble de valve (28) comportant un orifice de commande (4) et capable de relier les actionneurs pneumatiques avant (15) à une source d'air sous pression de véhicule, lorsque ladite commande (4) est libérée,
- un deuxième ensemble de valve (30) comprenant une configuration sélectionnable (30.1) capable de relier le circuit arrière (C3) audit orifice de commande (4) du premier ensemble de valve (28) afin de provoquer sa libération.

3. Système selon la revendication 2, dans lequel ledit deuxième ensemble de valve (30) comprend une configuration sélectionnable supplémentaire (30.1) capable de déconnecter l'interconnexion entre les circuits avant (C2) et arrière (C3).

4. Procédé pour commander les freins de véhicule de véhicules commerciaux ou industriels comportant un implant de frein pneumatique comprenant au moins
- un circuit avant (C2), pourvu d'actionneurs pneumatiques (15), configuré pour effectuer un freinage de service proportionnel à la mise sous pression de celui-ci ; et
- un circuit arrière d'urgence/de stationnement (C3), configuré pour effectuer un freinage d'urgence/de stationnement proportionnel à la ventilation de celui-ci,
le procédé comprenant l'étape d'interconnexion desdits circuits de sorte qu'une ventilation du circuit arrière (C3) provoque une mise sous pression correspondante du circuit avant (C2).
